**Europäisches Patentamt**

**European Patent Office**

**Office européen des brevets**

(19)

(11) Veröffentlichungsnummer: **0 158 378**
**B1**

(12) **EUROPÄISCHE PATENTSCHRIFT**

(45) Veröffentlichungstag der Patentschrift:
**07.01.88**

(21) Anmeldenummer: **85200286.4**

(22) Anmeldetag: **28.02.85**

(51) Int. Cl.⁴: **F 25 D 3/00**

(54) **Latentwärmespeicher für Kühlzwecke.**

(30) Priorität: **02.03.84 DE 3407684**

(43) Veröffentlichungstag der Anmeldung:
**16.10.85 Patentblatt 85/42**

(45) Bekanntmachung des Hinweises auf die Patenterteilung:
**07.01.88 Patentblatt 88/1**

(84) Benannte Vertragsstaaten:
**DE FR GB IT NL SE**

(56) Entgegenhaltungen:
**DE - A - 2 828 902**
**DE - A - 3 005 450**
**DE - A - 3 125 463**
**FR - A - 401 635**
**US - A - 2 534 789**

W. POHLMANN: "Taschenbuch für Kältetechniker", 14. Auflage, 1961, Verlag C.F. Müller, Seite 44, Karlsruhe, DE;

(73) Patentinhaber: **Philips Patentverwaltung GmbH,**
**Wendenstrasse 35 Postfach 10 51 49,**
**D-2000 Hamburg 1 (DE)**

(84) Benannte Vertragsstaaten: **DE**

(73) Patentinhaber: **N.V. Philips' Gloeilampenfabrieken,**
**Groenewoudseweg 1, NL-5621 BA Eindhoven (NL)**

(84) Benannte Vertragsstaaten: **FR GB IT NL SE**

(72) Erfinder: **Schröder, Johann, Dr., Adenauerallee 125a,**
**D-5100 Aachen (DE)**

(74) Vertreter: **Piegler, Harald, Dipl.-Chem. et al, Philips**
**Patentverwaltung GmbH**
**Wendenstrasse 35 Postfach 10 51 49,**
**D-2000 Hamburg 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Latentwärmespeicher für Kühlzwecke mit einem formstabilen geschlossenen Behälter, der Wasser oder eine eutektische Mischung von Wasser mit mindestens einem Salz als Speichermittel enthält, wobei der Behälter nur soviel Speichermittel enthält, dass ein Teil des Behältervolumens, der gleich oder wenig grösser als die maximale Volumenausdehnung des Speichermittels bei Benutzung des Speichers ist, bei Zimmertemperatur von Speichermittel freibleibt und mit einem Gas gefüllt ist.

Für die Speicherung von latenter Wärme zwischen ± 0°C und etwa –50°C sind Wasser und einige eutektische Mischungen von Wasser mit Salz besonders gut geeignet. Diese Speichermittel dehnen sich im Gegensatz zu fast allen anderen Stoffen beim Phasenübergang von flüssig nach fest um mehrere Volumenprozente aus. Dabei kommt noch erschwerend hinzu, dass diese Ausdehnung sehr ungleichmässig erfolgt und, wie in der DE-A-2 846 988 beschrieben, zu lokalen Aufbauchungen führt. Durch die in der genannten Offenlegungsschrift beschriebenen Zusätze kann diese ungleichmässige Ausdehnung allerdings weitgehend vermieden werden. Die Volumenausdehnung der Speichermittel bleibt aber in jedem Falle bestehen. Die dadurch in einem geschlossenen Speicherbehälter auftretenden Druckänderungen würden den Behälter schon beim ersten Speicherzyklus verformen und zerstören, wenn nicht zusätzlich zu den genannten Homogenisierungszusätzen geeignete Massnahmen ergriffen werden, um diese Volumenänderung aufzufangen. In der genannten Offenlegungsschrift wird die Volumenausdehnung durch die Verwendung von flexiblen Speicherbehältern aufgefangen.

Für bestimmte Anwendungen ist es aber unerlässlich, dass die Form und die Abmessungen des Speicherbehälters während des Betriebes unverändert bleiben. Eine Maschine zur Herstellung von Speiseeis sei hierfür als Beispiel genannt: Ein zylindrischer Speicherbehälter, mit einem Kältespeichermittel gefüllt, rotiert horizontal in der flüssigen Speiseeismischung, und der am Behälter anfrierende Speiseeisfilm wird durch einen feststehenden, über die Zylinderfläche gleitenden Schaber abgestreift. Der Speicherbehälter als sich bewegender Teil der Maschine muss also bezüglich Form und Abmessungen vollkommen stabil sein.

Die einfachste Massnahme zur Kompensation der Volumenänderung ist die, im Speicherbehälter einen der Ausdehnung des Speichermittels entsprechenden freien Raum zu lassen. Da die in diesem freien Raum befindliche Luft aber bei der Ausdehnung des Speichermittels auf sehr hohen Druck komprimiert würde, muss das Volumen des freien Raumes (Leervolumen) grösser als die Volumenzunahme des Speichermittels sein. Bei doppeltem Leervolumen würde so z.B. der Druck noch auf 2 Bar ansteigen. Evakuiert man den freien Raum, so wird der Behälter von aussen mit 1 Bar Überdruck belastet. Am günstigsten ist wohl ein Kompromiss zwischen beiden Massnahmen. Durch entsprechende Wandstärke des Stahlbehälters können die auftretenden Druckunterschiede dann aufgefangen werden.

Aus der FR-A-401 635 ist es bekannt, die im zuvor erwähnten freien Raum befindliche, wenig kompressible Luft durch ein hochkompressibles Gas, z.B. $CO_2$, zu ersetzen. Die zuvor erwähnten Druckunterschiede werden dadurch etwas verringert.

Verbleibende Nachteile dieser Massnahmen sind jedoch

a) durch die Druckunterschiede bedingte relativ grosse Wandstärken,

b) eine Speicherkapazität, die um den Betrag des Leervolumens, das bei völliger Verfestigung des Speichermittels freibleibt, reduziert ist und

c) eine sehr schlechte Wärmeleitfähigkeit an den Stellen des Speichers, wo das Leervolumen sitzt. Dies ist im obengenannten Beispiel vor allem nachteilig beim Einfrieren im Tiefgefrierfach und in der Anfangsphase der Eisherstellung.

Die genannten Nachteile können wenigstens teilweise behoben werden durch Behälterkonstruktionen, wie sie aus der US-A-1 380 987 und der DE-A-2 828 902 bekannt sind. Die Volumenänderung wird hier durch Zusammendrücken eines konzentrischen Schlauches aus Gummi, Silikon oder anderen elastischen Kunststoffen aufgefangen. Im Speicherbehälter wird so angenähert Atmosphärendruck aufrechterhalten.

Neben dem verbleibenden Nachteil des noch relativ grossen Leervolumens (Schlauch + Innenvolumen) treten mit dieser Massnahme folgende neue Schwierigkeiten auf:

a) Eine durch die starke mechanische Belastung und Verformung bedingte Begrenzung der Haltbarkeit und Betriebssicherheit (Dichtungsproblem).

b) Eine erschwerte Reinhaltung, da in das Schlauchinnere Luftfeuchtigkeit kondensieren oder z.B. Speiseeismischung eindringen und gefrieren kann.

c) Eine relativ komplizierte und störanfällige Konstruktion.

Aufgabe der Erfindung ist es nun, eine einfache und zuverlässige Massnahme anzugeben, um Druckänderungen, die durch Volumenausdehnung von Latentspeichermitteln beim Phasenübergang in formstabilen geschlossenen Speicherbehältern auftreten, zu kompensieren.

Diese Aufgabe wird erfindungsgemäss dadurch gelöst, dass der bei Zimmertemperatur von Speichermittel freibleibende Teil des Behältervolumens unter atmosphärischem Druck mit einem Gas gefüllt ist, das im Temperaturbereich zwischen Zimmertemperatur und der Schmelztemperatur des Speichermittels kondensiert.

Erfindungsgemäss geeignete Gase sind z.B.:

*Siedepunkt:*

| | |
|---|---|
| Trichlorfluormethan (Freon 11) $CCl_3F$ | 23,8°C |
| 1,2-Dichlortetrafluoräthan (Freon 114) $CClF_2CClF_2$ | 3,5°C |
| Butan $C_4H_{10}$* | –0,4°C |
| 1,1-Difluor-1-chloräthan (Genetron 142 B) $CH_3CClF_2$ | –9,2°C |
| Isobutan $CH(CH_3)_3$* | –11,7°C |

* Butan und Isobutan haben eine geringe Löslichkeit in den wässrigen Speichermedien, was bei deren Verwendung mit in Betracht gezogen werden muss. Die Freone und Genetron 142 B sind dagegen praktisch unlöslich in Wasser.

Ein Ausführungsbeispiel der Erfindung ist in der Zeichnung dargestellt und wird im folgenden näher beschrieben.

Es zeigen

Fig. 1  einen Latentwärmespeicher im Schnitt und

Fig. 2  ein Diagramm, in dem die Druck-Temperatur-Abhängigkeiten für die obengenannten Gase dargestellt sind.

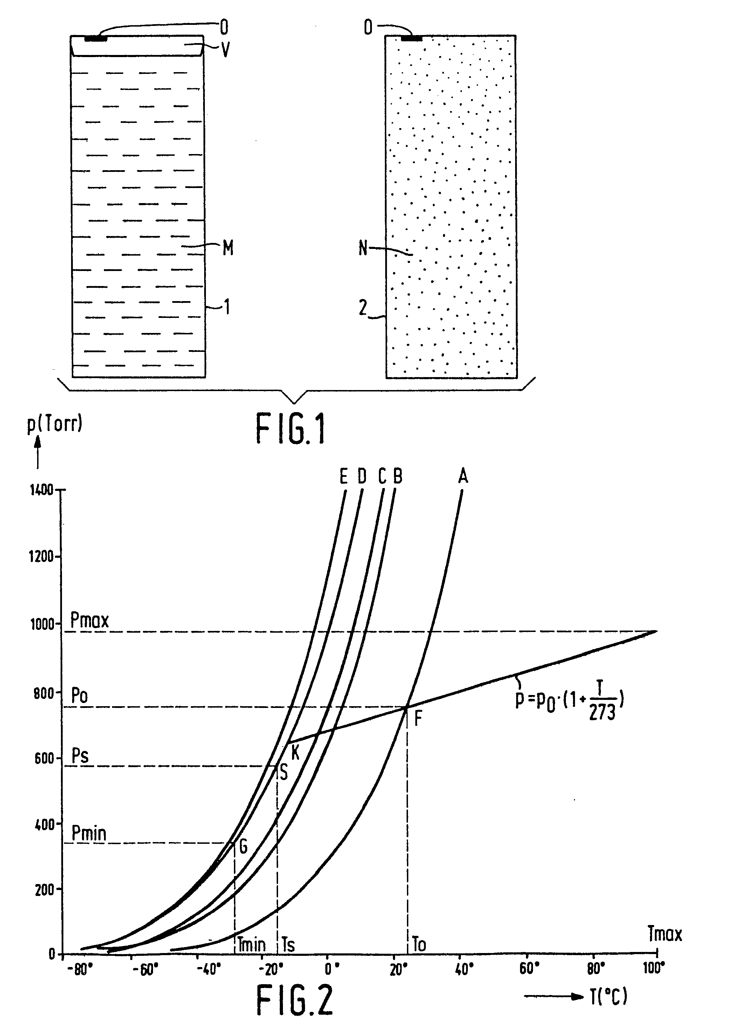

In Fig. 1 ist mit 1 ein formstabiler Speicherbehälter bezeichnet, der bei Zimmertemperatur mit flüssigem Speichermittel M und einem der Ausdehnung des Speichermittels beim Phasenübergang entsprechenden Gasvolumen V gefüllt ist. Mit 2 ist der gleiche Speicherbehälter bezeichnet nach Abkühlung unter Schmelztemperatur und Phasenübergang des Speichermittels M. Der Gasraum V ist hier ganz mit festem Speichermittel N gefüllt und das Gas weitgehend kondensiert. Ö sind geschlossene Füllöffnungen.

In Fig. 2 bedeuten

| A | $CCl_3F$ | Trichlorfluormethan (F 11) |
| B | $C_2Cl_2F_4$ | 1,2-Dichlorfluormethan (F 114) |
| C | $C_4H_{10}$ | Butan |
| D | $C_2H_3ClF_2$ | 1,1-Difluor-1-chloräthan (G 142 B) |
| E | $C_4H_{10}$ | Isobutan |

| Tmin | tiefste Temperatur im Gefrierfach |
| Ts | Schmelzpunkt $NH_4Cl/H_2O$ |
| | (19,5 Gew.-% $NH_4Cl$ + 80,5 Gew.-% $H_2O$) |
| To | Raumtemperatur/Fülltemperatur |
| Tmax | höchste Temperatur beim Spülen |
| Pmin | Gasdruck bei Tmin |
| Ps | Gasdruck am Schmelzpunkt |
| Po | Gasdruck bei Zimmertemperatur |
| Pmax | Gasdruck bei Tmax |

Anhand eines Beispiels soll veranschaulicht werden, welche Verhältnisse im Speicherbehälter bei solcher Gasfüllung vorliegen:

In dem formstabilen Speicherbehälter 1 (Fig. 1) mit $NH_4Cl/H_2O$ als Speichermittel M ist ein Leervolumen V von 5% gelassen, das bei einer Raumtemperatur von 24°C und Atmosphärendruck (1013 mbar) mit Genetron 142 B gefüllt wurde. Im Diagramm (Fig. 2) entspricht dies dem Zustand in Punkt F.

Wird der Speicher nun in ein Tiefgefrierfach gelegt, so nimmt mit der Temperatur auch das Gasdruck nach $p = p_0 \cdot (1 + T/273)$, d.h. um 1/273 pro °C ab, da das Volumen in erster Näherung konstant bleibt. Im Diagramm bewegt man sich also von Punkt F auf der Geraden nach links, bis zu Punkt K, wo man auf die Dampfdruckkurve D des Genetrons trifft. Es kondensiert ab hier mit weiterer Abkühlung mehr und mehr Genetron und der Druck nimmt entlang der Dampfdruckkurve des Genetrons steiler ab.

Beim Punkt S wird die eigentliche Speichertemperatur von –16°C erreicht, bei der das Speichermittel $NH_4Cl/H_2O$ gefriert. Die Temperatur bleibt jetzt konstant, bis das ganze Speichermittel fest geworden ist. Durch die 4,4%ige Ausdehnung des Speichermittels beim Phasenübergang geht hierbei das Leervolumen von 5% auf 0,6% zurück. Der Gasdruck ändert sich aber nicht, sondern eine der Volumenabnahme entsprechende Gasmenge kondensiert.

Bei weiterer Abkühlung des völlig geladenen Speichers, d.h. des völlig erstarrten Speichermittels, sinkt der Dampfdruck weiter entlang der Dampfdruckkurve des Genetrons, bis bei G ein minimaler Druck von etwa 4,67 Bar für die üblicherweise tiefsten Temperaturen von Gefriervorrichtungen erreicht ist.

Wird der Speicher nach der Benutzung gereinigt, so kann er zum Beispiel in einer Spülmaschine kurzzeitig Temperaturen bis nahe 100°C ausgesetzt werden. Der Gasdruck im Leervolumen wandert dabei entlang der Geraden $p = p_0 \cdot (1 + T/273)$ nach rechts und erreicht höchstens 1,29 Bar.

Dem Diagramm ist also zu entnehmen, dass der Druck im Speicher selbst bei 100°C nur um 280 mbar über Atmosphärendruck ansteigen kann. Beim Abkühlen beträgt der Druck des Genetrons am Schmelzpunkt des $NH_4Cl/H_2O$ von –16°C immer noch 758 mbar und bleibt auf diesem Wert trotz der drastischen Volumenabnahme konstant. Selbst bei den tiefsten Temperaturen von etwa –28°C, die in der Praxis vorkommen können, bleiben immer noch 465 mbar Gasdruck im Speicher erhalten. Es werden pro Speicher mit 1 Liter Speichermittel etwa 50 cm$^3$ Gasfüllung gebraucht.

Vorteile der Erfindung sind:

a) geringe Druckänderungen unter Betriebsbedingungen, ermöglicht formstabile Speicherbehälter mit einfacher Konstruktion und geringer Wandstärke;

b) optimale Raumausnutzung mit entsprechend optimaler Speicherkapazität;

c) gute und gleichmässige Wärmeübergänge.

Es bleibt lediglich ein relativ kleines Leervolumen von z.B. 5% im geschmolzenen Zustand, das aber beim Gefrieren gegen 0% geht.

Will man dieses kleine Leervolumen auch noch vermeiden, so kann man das Gas anstatt direkt in das Leervolumen in einen flexiblen Kunststoffbehälter (z.B. einen beidseitig geschlossenen Gummi- oder Siliconschlauch) von gleichem Rauminhalt wie die Ausdehnung des Speichermittels geben. Diesen steckt man in den Speicherbehälter (gegebenenfalls durch Stützen im Behälterzentrum festgehalten), den man jetzt vollkommen mit Speichermittel füllt und dann verschliesst.

Weitere Beispiele für geeignete Latentspeichermittel und deren physikalische Daten sind in der nachfolgenden Tabelle zusammengestellt. Aus den angegeben Werten für die Volumenänderung lässt sich die benötigte Gasmenge leicht ermitteln.

Tabelle

Latentwärmespeichermittel für Kühlzwecke
(x = am Schmelzpunkt; eut = eutektisch; s = fest; l = flüssig)

| Zusammensetzung | Gew.-% Salz | | Schmelzpunkt °C | Dichte $D_s$ g/cm$^3$ | (20°C) $D_l$ g/cm$^3$ | Volumenänderung $V_{l \to s}$ |
|---|---|---|---|---|---|---|
| $Al(NO_3)_3/H_2O$ | 30,5 | eut | −30,6 | 1,251x | 1,283 | +4,1% |
| $NH_4F/H_2O$ | 32,3 | eut | −28,1 | 1,001x | 1,096 | +9,4% |
| $NH_4SCN/H_2O$ | 42,0 | eut | −25,5 | 1,065x | 1,097 | +4,7% |
| $KF/H_2O$ | 21,5 | eut | −21,6 | 1,168x | 1,194 | +5,8% |
| $NaCl/H_2O$ | 22,4 | eut | −21,2 | 1,108x | 1,165 | +6,4% |
| $(NH_4)_2SO_4/H_2O$ | 39,7 | eut | −18,5 | 1,166x | 1,227 | +6,0% |
| $NaNO_3/H_2O$ | 36,9 | eut | −17,7 | 1,211x | 1,29 | +7,7% |
| $NH_4Cl/H_2O$ | 19,5 | eut | −16,0 | 1,020x | 1,059 | +4,4% |
| $K_2HPO_4/H_2O$ | 36,8 | eut | −13,5 | 1,303x | 1,357 | +5,1% |
| $KCl/H_2O$ | 19,5 | eut | −10,7 | 1,052x | 1,126 | +7,3% |
| $ZnSO_4/H_2O$ | 27,2 | eut | − 6,5 | 1,252x | 1,34 | +7,3% |
| $KHCO_3/H_2O$ | 16,95 | eut | − 5,4 | 1,018x | 1,115 | +9,2% |
| $NH_4H_2PO_4/H_2O$ | 16,5 | eut | − 4,0 | 1,044x | 1,092 | +4,8% |
| $MgSO_4/H_2O$ | 19,0 | eut | − 3,9 | 1,152x | 1,208 | +5,3% |
| $NH_4HCO_3/H_2O$ | 9,5 | eut | − 3,9 | 0,992x | 1,036 | +4,7% |
| $NaF/H_2O$ | 3,9 | eut | − 3,5 | 0,958x | 1,040 | +8,3% |
| $KNO_3/H_2O$ | 9,7 | eut | − 2,8 | 0,992x | 1,068 | +7,6% |
| $Na_2CO_3/H_2O$ | 5,9 | eut | − 2,1 | 0,984x | 1,062 | +7,8% |

## Patentansprüche

1. Latentwärmespeicher für Kühlzwecke mit einem formstabilen, geschlossenen Behälter, der Wasser oder eine eutektische Mischung von Wasser mit mindestens einem Salz als Speichermittel enthält, wobei der Behälter nur soviel Speichermittel enthält, dass ein Teil des Behältervolumens, der gleich oder wenig grösser als die maximale Volumenausdehnung des Speichermittels bei Benutzung des Speichers ist, bei Zimmertemperatur von Speichermittel freibleibt und mit einem Gas gefüllt ist, dadurch gekennzeichnet, dass der bei Zimmertemperatur von Speichermittel (M) freibleibende Teil (V) des Behältervolumens unter atmosphärischem Druck mit einem Gas gefüllt ist, das im Temperaturbereich zwischen Zimmertemperatur und der Schmelztemperatur des Speichermittels kondensiert.

2. Latentwärmespeicher nach Anspruch 1, dadurch gekennzeichnet, dass der von Speichermittel freibleibende Teil (V) des Behältervolumens mit Trichlorfluormethan, 1,2-Dichlorfluormethan, Butan, 1,1-Difluor-1-chloräthan und/oder Isobutan gefüllt ist.

2. Latentwärmespeicher nach Anspruch 1 oder 2, dadurch gekennzeichnet, dass sich das Gas in einem flexiblen Kunststoffbehälter von gleichem Rauminhalt wie die Ausdehnung des Speichermittels befindet.

4. Latentwärmespeicher nach Anspruch 3, dadurch gekennzeichnet, dass der gasgefüllte Kunststoffbehälter durch Stützen im Zentrum des Speicherbehälters festgehalten wird.

## Claims

1. A latent heat storage device for cooling purposes having a non-deformable closed container which comprises water or a eutectic mixture of water with at least a salt as a storage medium in which the container comprises only so much storage medium that a part of the volume of the container which is equal to or slightly larger than the maximum expansion of the volume of the storage medium during operation of the device, at room temperature remains free from storage medium and is filled with a gas, characterized in that the part (V) of the volume of the container which at room temperature remains free from storage medium (M) is filled with a gas at atmospheric pressure which condenses in the temperature range between room temperature and the melting temperature of the storage medium.

2. A latent heat storage device as claimed in claim 1, characterized in that the part (V) of the volume of the container remaining free from the storage medium, is filled with trichlorofluoromethane, 1,2-dichlorofluoromethane, butane, 1,1-difluoro-1-chloroethane and/or isobutane.

3. A latent heat storage device as claimed in claim 1 or 2, characterized in that the gas is present in a flexible synthetic resin container of the same contents as the expansion of the storage medium.

4. A latent heat storage device as claimed in claim 3, characterized in that the gas-filled synthetic resin container is held in the center of the storage device container by supports.

## Revendications

1. Réservoir de chaleur latente pour des buts de réfrigération comportant un récipient fermé non déformable contenant de l'eau ou un mélange eutectique d'eau et d'au moins un sel comme moyen de stockage, le récipient ne contenant que tant de moyens de stockage qu'une partie de son volume égale ou légèrement supérieure à la dilatation du volume maximal du moyen de stockage dans le cas d'utilisation du réservoir reste exempte de moyen de stockage à la température ambiante et est remplie d'un gaz, caractérisé en ce que la partie (V) du volume du récipient qui reste exempte de moyens de stockage (M) à la température ambiante est remplie, sous pression atmosphérique d'un gaz qui se condense dans la gamme de températures comprise entre la température ambiante et le point de fusion de moyen de stockage.

2. Réservoir de chaleur latente selon la revendication 1, caractérisé en ce que la partie (V) du volume du récipient, qui reste exempte de moyen de stockage, est remplie de trichlorofluorométhane, 1,2-dichlorofluorométhane, butane, 1,1-difluoro-1-chloro-éthane et/ou isobutane.

3. Réservoir de chaleur latente selon la revendication 1 ou 2, caractérisé en ce que le gaz se trouve dans un récipient en matière synthétique en ce que le gaz se trouve dans un récipient en matière synthétique flexible d'une contenance égale à la dilatation du moyen de stockage.

4. Réservoir de chaleur latente selon la revendication 3, caractérisé en ce que le récipient en matière synthétique rempli de gaz est maintenu à l'aide de supports au centre du récipient de stockage.

FIG.1

FIG.2